# EUROPEAN PATENT APPLICATION

(11) **EP 1 022 161 A2**
(43) Date of publication of application: **26.07.2000**
(21) Application number: 00200021.4
(22) Date of filing: 04.01.2000
(51) Int. Cl.: B60B 23/06

(54) **Demountable wheel for a vehicle with at least two wheels**

(30) Priority: 25.01.1999 IT MI990038 U
(71) Applicant: PIAGGIO & C. S.p.A., 56025 Pontedera (Pisa) (IT)
(72) Inventor: Bagnoli, Alessandro, 56030 Perignano di Lari (Lari)-Pisa (IT); Bernardi, Luca, 56025 Pontedera (Pisa) (IT)
(74) Representative: De Gregori, Antonella

(57) **Abstract**

A demountable wheel for a vehicle with at least two wheels, placeable in the lower part (12, 13) of a vehicle with at least two wheels on which is arranged a rotation axis (14) bearing a demountable wheel (11). The wheel 11 includes a hub (17) and a rim (21), removable from hub (17), fixed to it with bolts (23), in which the hub (17) rotates and the rim (21) has attachments (27), (28) to receive freely removable fixing parts (23), the attachments (27, 28) being arranged on the hub (17) on the wheel's surface facing inwards and on the rim (21) on a surface facing the wheel's exterior.

## Description

The present invention refers to a demountable wheel for a vehicle with at least two wheels. It is known that in current vehicles, with at least two wheels, especially those known as scooters, basically three wheel types are used.

The first type utilises a wheel in which both the hub and rim are totally made of steel.

In the second type the wheel is wholly made of aluminium.

The use of these two types means that during the wheel's assembly and disassembly stages, the removal of various joined parts on the scooter is necessary, creating operational complications.

A third wheel type consists of a wheel consisting in various parts (made of various materials), i.e. the hub may be made of aluminium or steel and the rim, usually steel, is normally bolted to the hub.

It is increasingly expedient, in certain specific cases, to use the previously mentioned third type of wheel, in which the wheel consists of a coupled rim and hub.

At present, wheels of this construction type have a rim which is coupled to the hub "from the outside"; in fact this solution has rim attachments which are external to the corresponding hub attachments and such attachments are secured by bolts or fixing screws.

In this manner, when it is necessary to disassemble the former from the latter, after removing the bolts or fixing screws holding the two parts, the rim only needs to be moved by pulling it away from the hub.

At present, with a demountable wheel of this configuration, the bolt or fixing screw heads and, especially, the hub attachments are generally visible from the wheel's exterior which is not aesthetically desirable.

Alternatively, as well as this fixing arrangement, a click-fitted decorative cover must be used, for example, on the hub and represents an additional cost.

It must therefore be noted that this type of demountable wheel, although having the advantage of rim disassembly with respect to the hub, when applied, for example, to scooters, is not always pleasing, and at times, an additional decorative cover is required with its consequent assembly/disassembly in cases of replacement.

The aim of the invention is therefore that of producing a wheel which remedies the technical problems as well as those concerning the positioning of previously explained parts.

Another aim of the invention is to produce a wheel that allows its rapid assembly/disassembly on the scooter or other vehicle, without the need for the positioning or removal of additional parts.

These aims, according to the present invention, are achieved by producing a demountable wheel for a vehicle with at least two wheels as shown in claim 1.

Additional characteristics also emerge from the dependant claims.

The characteristics and advantages of a demountable wheel for a vehicle with at least two wheels, according to the present invention, become more apparent from the following illustrative and non limiting description, referring to the schematic drawings enclosed, in which:
Fig. 1 shows a front view of a demountable wheel, according to the present invention, with the hub's rotating position represented by the dotted line.
Fig. 2 is a partly sectional side view of a scooter part which shows a front wheel in a single support arm, according to Fig. 1.

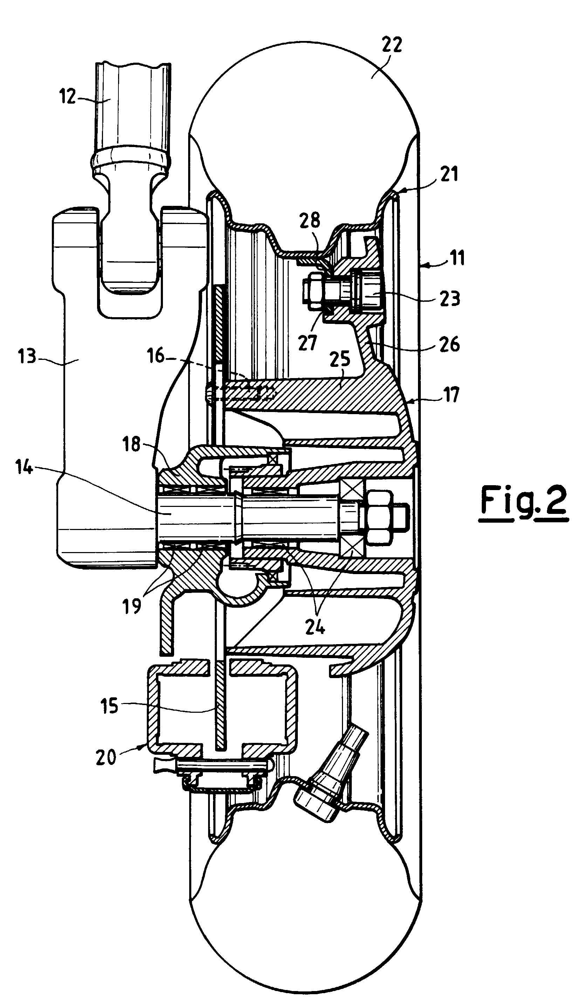

By referring firstly to Fig. 2, it is possible to note how, on a lower part of a vehicle with at least two wheels, there is a demountable wheel 11 produced according to the present invention.

In particular, it may be noted how the steering rod 12, partly shown, extends downwards in a front suspension arm 13 with a rotation axis 14 bearing the demountable wheel 11, in this case a front wheel.

Moreover, a brake disc 15 is inserted on the rotation axis 14 from one side, held by screws 16, only one of which is shown, to a hub 17 of the same wheel 11.

It should also be noted that, from the same side, on a support 18, arranged between bearings 19 on the rotation axis 14 and integral with the front suspension arm 13, is fixed a brake caliper, denoted by 20, able to fit above the brake disc 15 to carry out its braking action in a selective manner.

It should also be noted that there is room for an odometer, not shown in the illustrated example.

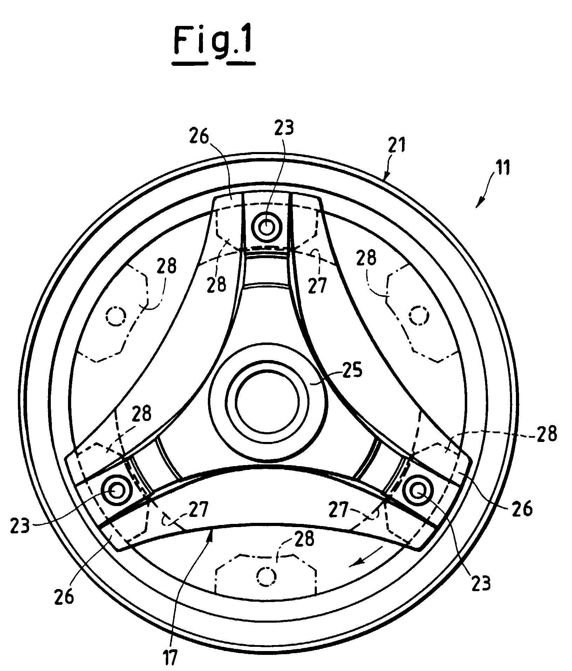

The wheel 11, according to the present invention, as shown in Fig. 1, includes the central hub 17 and a peripheral rim 21, bearing a pneumatic tyre 22, to which the hub 17 and rim 21 are connected by bolts 23 passing through the relative holes.

The hub 17 constitutes the wheel's central nucleus and inside it are housed interface and support bearings 24 with the wheel axle 14.

As results from Fig. 1, hub 17 has a pre-determined quantity of spokes 26 extending from one part of it or a central nucleus 25, which allows rim 21 disassembly.

Both the spokes 26 of the hub 17 on the wheel's surface facing inwards in a recess 27, which the rim 21 on plates 28, radially turned towards the wheel centre, identify complementary attachments, facing each other, in which fixing bolts 23 are inserted between the hub and rim.

A recess 27 of the wheel's surface facing inwards, that identifies the attachments forming part of each spoke 25 of hub 17, and a surface facing outwards from the plates 28, forming part of the rim 21 attachments, are brought together before being joined and fixed by bolts 23.

In the case shown in figure 2, the rim's removal is extremely easy since it only requires the disassembly of fixing bolts 23 between the rim 21 and hub 17.

Then, the rim 21 bearing the pneumatic tyre 22 is turned with respect to hub 17, so that the complementary attachments 28 of one (21) and 27 of the other (17) are put out of position by a certain angle (for example 60°) as shown by the dotted line in figure 1. At this stage, inclining the rim 21, with respect to the hub 17, allows the rim's removal 21 from hub 17. Thus the pneumatic tyre 22 arranged on rim 21 is also removed.

The steps are reversed for the assembly of the demountable wheel. In the event of disassembly of such a wheel from a twin fork, the steps to be carried out are the same as those for a traditional type demountable wheel. Advantageously, in this case, after disassembling the fixing bolts 23 between the rim 21 and hub 17, the rim may then be removed from the hub by tilting the rim away from the hub.

Hence the demountable wheel's repair and maintenance operations, of the present invention, are simplified.

It is important to list the advantages of the present invention.

Firstly, it must be mentioned that the wheel's overall aesthetic effect is decidedly better, than that of current cases which use the first extraction type mentioned in the introductory part of the description.

Moreover, the use of decorative rim covers is unnecessary, thus eliminating extra costs and positioning difficulties.

It should also be noted that such a wheel, compared to alloy wheels, has fewer "valuable" aluminium components, necessary to fix the wheel. In fact, it can be noted the sole presence of a hub, complete with spokes, bearing the disc, instead of a hub bearing a disc plus a complete wheel together with spokes and rim. As a consequence, the cost of this type of wheel, according to the invention, is potentially less than that of others already known.

The previous description then underlined how it is possible to easily disassemble just the rim, with pneumatic tyre, from both the front and rear wheels of single arm types.

Finally, it proves possible to use the same rim for both wheels of the vehicle, so as to potentially have just one spare wheel. Naturally, numerous alterations and variations are possible, which may be carried out by a specialised technician, without such action detracting from the present invention.

## Claims

1. A demountable wheel for a vehicle with at least two wheels, that may be arranged in the lower part (12, 13) of a vehicle with at least two wheels on which is arranged a rotation axis (14) bearing a demountable wheel (11). Said wheel (11) including a hub (17) and a rim (21), removable from said hub (17), being fixed to it with bolts (23), characterised by the fact that said hub (17) and rim (21) have attachments (27, 28) to receive freely removable fixing parts (23), said attachments (27, 28) being positioned on said hub (17) on the wheel's surface facing inwards and on the rim 21 on a surface facing the wheel's exterior.

2. A demountable wheel according to claim 1, characterised by the fact that said hub (17) includes a central nucleus (25) from which radial spokes (26) extend.

3. A demountable wheel according to claim 1, characterised by the fact the said plates on said rim (21) comprise attachments (28) radially facing towards the wheel's centre.

4. A demountable wheel according to claim 1, characterised by the fact that said attachments on the said hub (17) comprise of recesses (27) facing the wheel's inwards.

5. A demountable wheel according to claim 4, characterised by the fact that said recesses (27) are obtained on the radial spokes (26) which extend from a central nucleus (25) of said hub (17).
